# EUROPEAN PATENT SPECIFICATION

(11) **EP 2 903 420 B1**
(45) Date of publication and mention of the grant of the patent: **03.04.2019**
(21) Application number: 13795152.1
(22) Date of filing: 01.10.2013
(51) Int. Cl.: A01K 1/00, F24F 3/16

(54) **A METHOD AND MEANS FOR THE CLEANING OF AIR, IN PARTICULAR STABLE AIR**
VERFAHREN UND VORRICHTUNG ZUR LUFTREINIGUNG, INSBESONDERE VON STEHENDER LUFT
PROCÉDÉ ET DISPOSITIF D'ÉPURATION D'AIR, NOTAMMENT D'AIR STABLE

(30) Priority: 05.10.2012 DK 201200608
(43) Date of publication of application: 12.08.2015
(73) Proprietor: Munters A/S, 9600 Aars (DK)
(72) Inventor: SANDRÉUS, Henrik, 9600 Aars (DK); KIEL-MADSEN, Lasse, 9600 Aars (DK); LESAGE, Giorgio, 9600 Aars (DK)
(74) Representative: Larsen & Birkeholm A/S
(86) International application number: PCT/DK2013/000064
(87) International publication number: WO 2014/053138

(56) References cited:
- EP-A1- 1 066 752
- EP-A2- 1 834 522
- WO-A1-2004/011127
- WO-A1-2005/061078
- CA-A- 611 829
- US-A- 5 620 653

## Description

### The prior art

The invention relates to a method of cleaning air, such as stable air, by sucking it out of the stable and supplying it to an air cleaning system, said stable air being first mixed with liquid containing either an acid or a base for neutralizing ammonia and/or the odour molecules, following which the air is conveyed through a filter/droplet separator in order to collect the liquid, while the cleaned air is discharged to the surroundings, as well as means for performing the method.

Stable air contains both ammonia and hydrogen sulphide and other chemical compounds as well as dust and, in the case of poultry, also feathers.

This means that neutralization and also filtration of the stable air have to take place before it is cleaned of undesired components.

Known systems for this purpose are capable of both neutralizing and filtering, but the systems are difficult to keep in good order with a view to an energy-friendly operation, and to this should be added a great need of maintenance, since the filters will pack because of dust and feathers and thereby restrict the filtration capacity.

In principle, the known systems operate as a form of air washing, since ammonia-containing air is supplied to a filter block, which is sprayed from above with a flow of liquid having a low pH value in order to pick up ammonia from the stable air.

As a consequence, the filter will clog rapidly and thereby have its filtration capacity reduced, and at the same time the consumption of energy for the exhaustion of the air increases in step with the increased pressure loss.

In connection with chemical air cleaning for the reduction of ammonia, the sprayed filter blocks or spray tower scrubbers have exclusively used a sulphuric acid solution. This has had a good effect on ammonia, but a limited effect on odour. Existing air cleaners have used 2 steps ⁻ e.g. acid for the reduction of ammonia and biological air cleaning for the reduction of odour, but the biological filters, too, clog easily, and it is costly systems both in terms of construction and of operation.

WO2004/011127 discloses a method of purifying air and an apparatus for purifying air by scrubbing with an acid where the air to be cleaned pass through the apparatus in a substantially vertical flow. The apparatus for purifying air contains washing liquid and comprises: at least one air cleaning unit comprising a scrubber in which the air to be purified is washed with the acid containing washing liquid, and from which the purified air and the spent washing liquid is withdrawn; and a washing liquid control unit, arranged in a distance from the air cleaning unit(s), in which the composition of the spent washing liquid withdrawn from the scrubber is readjusted, if desired, by addition of fresh water and fresh acid and withdrawal of a corresponding amount of the spent washing liquid as a product, such as a fertilizer mixture, before the optionally readjusted washing liquid is transferred to and introduced into the scrubber as acid containing washing liquid.

WO 2005/061078 discloses an air cleansing apparatus including an air exhaust, a ventilator, a moistening chamber with a number of nozzles, an air intake and a liquid collecting unit, where a central part is entirely or partly designed as a double-walled pipe section, that is with an internal and an external pipe, and that the apparatus furthermore includes an air diffuser which is disposed downstream of the ventilator at one end of the internal pipe.

There are no effective methods for the reduction of ammonia in poultry stables. The large amounts of greasy dust and feathers mean that the operational problems are so great that they are not useful in practice in professional poultry and egg production units.

### The object of the invention

It is the object of the invention to remedy these drawbacks, and this is achieved according to the invention by a method in which the air to be cleaned, such as stable air, is sucked out of the stable and supplied to an air cleaning system constituted of an elongated box, pipe or container (2),
- said stable air (5a) first enters a mist zone where the stable air (5a) is mixed with liquid containing either an acid or a base to neutralize ammonia and/or odorous molecules the supply of acid- or base-containing liquid takes place in the form of a liquid mist (7), which liquid mist (7) is generated by nozzles (20) mounted on a pipe system (6), so that the liquid mist is supplied across the entire air flow area;
- following the mist zone, the air (5b) is conveyed through a filter (8a, 8b) in order to collect the liquid,
- the cleaned air (5c) is discharged to the surroundings by a ventilator (3) mounted at the discharge end of the box (2),
**characterized in that** the stable air (5a) passes through the mist zone in a horizontal direction of flow.

Further, the invention relates to an air cleaning system constituted of an elongated box, pipe or container (2) ensuring a substantially horizontally extending flow of air through a mist chamber, the box (2) comprises an admission opening (4) for stable air (5a) to be cleaned, the box (2) further comprises the mist chamber at the admission end holding a liquid mist (7) emitted from a pipe system (6) being provided with a plurality of nozzles (20), one or more filters (8a, 8b) are disposed in the box (2) after, i.e. downstream of, the mist chamber and a ventilator (3) is mounted at the discharge end of the box (2), i.e. downstream of the filters (8a, 8b), discharging clean, dried air (5c) to the surroundings.

This provides several advantages.

First and foremost, the physical separation of the mixing zone from the filter zone means that the need for the cleaning of filters is reduced, since both dust and feathers will be trapped in the liquid mist and be suspended in the precipitated liquid, so that the amount of dust in the air is minimal when it is conveyed to the filter, the droplet separators.

This ensures a high efficiency both in terms of cleaning of the stable air and in terms of the operation of the system. Finally, problems of increased energy consumption because of increased clogging of the filter will be minimized.

When the mist-generating system comprises nozzles mounted on a pipe system, this may be designed to ensure a stable uniform mist in the entire flow area of the air.

This results in an effective neutralization, which is so effective that in many cases it will suffice to clean just 20% of the stable air to satisfy animal welfare requirements as well as environmental requirements.

When, as stated in claim 3, liquid is collected with a view to recycling, a considerable liquid saving is achieved, while ensuring that dust and feathers suspended in the water may be precipitated and thus cannot settle on the filters.

When the pH value of the liquid is measured, and it is adjusted currently with a view to maintaining a stable pH value, it is ensured that the liquid as well as the acid/base consumption are limited. As a result, separate systems for the liquid treatment are moreover avoided, since the addition of acid and base as well as the dust separation may take place at the bottom below the mist zone.

When the nozzles are mounted on a pipe which extends transversely to the flow of air, an even and thereby effective mixing and thereby a high efficiency are ensured.

Finally, it is expedient to provide the nozzles with a twisted, helically extending outlet end, since this ensures generation of mist with a good distribution at the turbulent emission of liquid and thereby an effective neutralization zone.

### The drawing

An example of an embodiment of the invention will be described more fully below with reference to the drawing, in which
- fig. 1: shows a system seen in perspective, incorporated in a box,
- fig. 2: shows a longitudinal section of the system with piping,
- fig. 3: shows a front view of the nozzles on the pipe system, and
- fig. 4: shows a nozzle seen in perspective.

### Description of an exemplary embodiment

The invention will be described below in the manner that the air cleaning system will be described first, following which the method will be described.

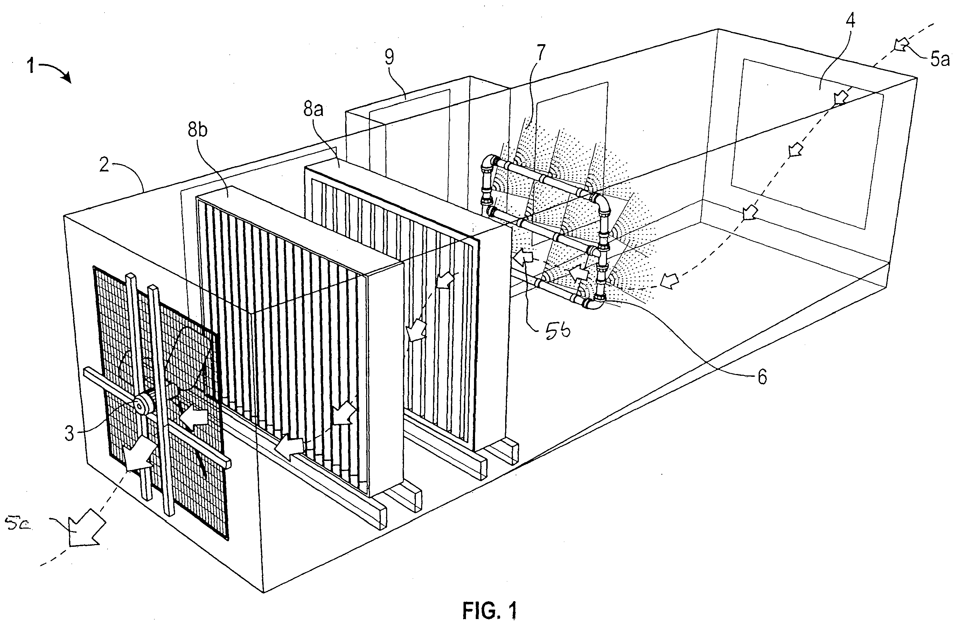

Fig. 1 shows an example of a system according to the invention, said system being constructed in an elongated box, pipe or container 2, which ensures a substantially horizontally extending flow of air.

At one end of the box, to the right in fig. 1, an opening 4 is provided, which is the admission opening for the stable air 5a which is to be cleaned during the passage through the system.

Normally, the stable air 5a will contain ammonia and hydrogen sulphide as well as other chemical compounds, which substances are to be separated from the stable air before it may be discharged in a cleaned state to the surroundings without any unpleasant odour or without causing inconvenience to the external environment.

Another purpose is to trap the ammonia with an acid-containing liquid, so that the nitrogen content in the liquid may be used subsequently as a fertilizer.

When both acid and base may be used, it will be possible to achieve either reduction of ammonia and/or reduction of odour, and this may be achieved by a two-step cleaner or a one-step cleaner, with base being used part of the year for the reduction of odour and sulphuric acid being used part of the year for the reduction of ammonia. The latter operation will reduce the initial costs and price optimize the environmental benefit.

The admission end of the box 2 includes a space, a chamber, which is intended to hold a liquid mist 7 emitted from a pipe system 6, on which a plurality of nozzles 20 are mounted, said liquid being discharged under pressure to generate the liquid mist. The liquid consists of water admixed with acid or base in dependence on whether it is ammonia or hydrogen sulphide/odour which is to be trapped, removed from the stable air.

In this mist zone, dust and feathers are suspended, just as the odorous substances, and ammonia is neutralized, so that, having passed the mist chamber, the air 5b is cleaned of dust as well as odour and ammonia.

The liquid will currently drop down on the bottom of the box 2, where it may be collected with a view to recycling, as will be described later.

A plurality of droplet separators, filters 8a and 8b, are disposed subsequently in the box 2, said droplet separators serving to trap the last liquid components in the air, before this air 5a now entirely cleaned and dry may be discharged to the surroundings by means of a ventilator 3 mounted at the opposite end of the box, the discharge end. Several ventilators may be used instead of one ventilator, and they may also be arranged such that the air is blown out in various directions.

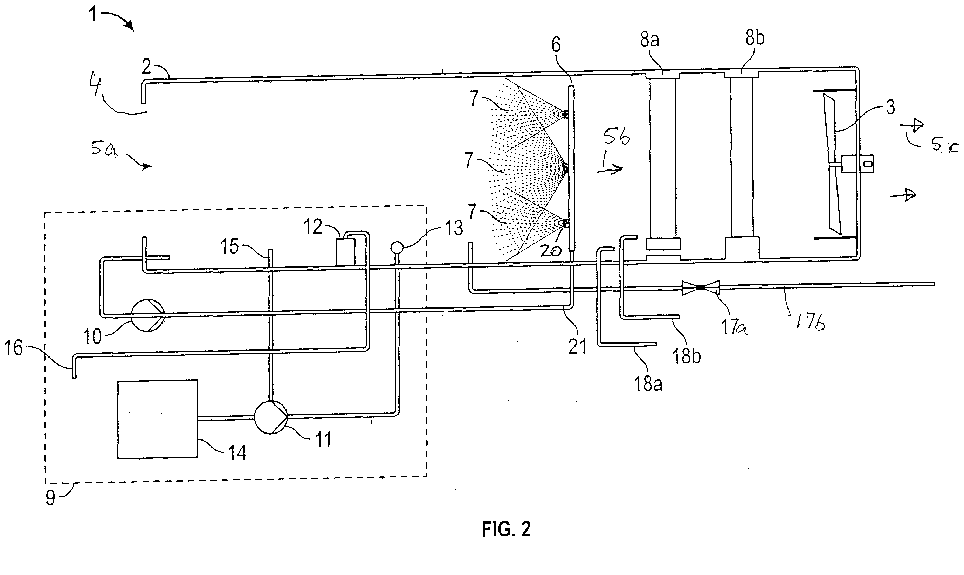

Fig. 2 shows the principle of the mist generation and the liquid treatment in the system. An upper meter 18b and a lower meter 18a are mounted for the exhaust of liquid from the droplet separators 8a and 8b, and a pipe 17b is mounted for the discharge of surplus water from the mist chamber, said discharge being controlled by a valve 17a.

Supply of liquid to the nozzles 20 takes place via a supply pipe 21, which supplies liquid under pressure via a pump 10. A pH meter 13 controls the supply of acid/base from a container 14, from which a pump 11 may supply it to the supply pipe 21 and thereby to the circulation liquid.

Rather than a separate treatment system where acid is admixed with water, and dust/feathers are removed, the bottom of the air cleaner is used as a treatment system.

Finally, there is mounted an exhaust system comprising a pump 12 for the exhaustion of the nitrogen- or sulphur-containing water to a discharge 16 with a view to collection in a container or the like.

These installations may be mounted in a control cabinet 9, which may also be seen in fig. 1 as an addition to the box.

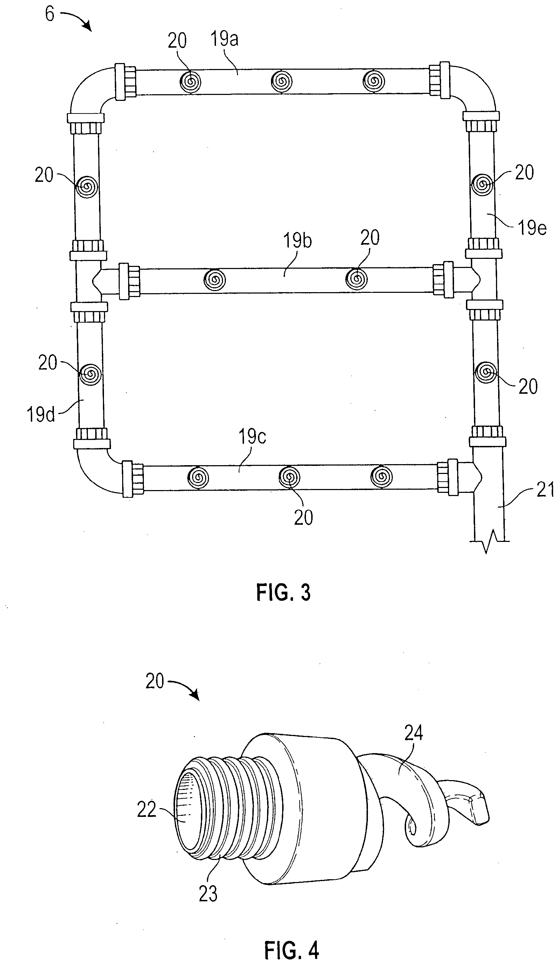

The nozzles 20, which are shown in fig. 4, are provided with a threaded member 23 for threading into reception threads in a pipe system, which is shown in fig. 3.

Preferably, each nozzle 20 is provided with a helically extending or screw-shaped outlet end 24, and this shape causes the mist jet to be emitted during rotation in a turbulent movement, as indicated in figs. 1 and 2.

The purpose of this turbulent mist generation 7 is to achieve the greatest possible mixing with the stable air, and thereby to ensure the best possible effect in the liquid zone.

This very effective mixing reduces the circulated liquid amount and thereby the consumption of energy and ensures that the efficiency, the cleaning effect, is high.

To achieve a uniform generation of mist in the entire air flow area, the nozzles 20 are mounted on an annular pipe comprising pipe members 19a, 19c, 19d and 19e, optionally with an intermediate connecting pipe 19b. This pipe system 6 with nozzles 20 is mounted transversely in the box, as shown in fig. 1, to ensure the optimum distribution of the generation of mist in the chamber.

The system may be constructed as a one-step cleaner and a two-step cleaner. The matter described in the foregoing is a one-step cleaner. In case of a two-step cleaner, just a repetition of mist chamber and droplet separator(s) is involved. In case of a one-step cleaner, it is possible to apply base or acid during the entire year or parts of the year. For example, it is possible to apply base in the periods where the problems of odour are greatest, and then apply sulphuric acid for the reduction of ammonia at other times.

The method will be described below with reference to fig. 1.

The stable air 5a, which contains ammonia and odorous substances as well as dust and possibly feathers, is sucked out by means of one or more ventilators 3 from the stable and into the cleaning area via an opening 4 at the end.

The air 5a is first conveyed into a liquid mist 7, which consists of a liquid admixed with acid or base. For example, at a low pH value of about 2-4 in the liquid mist, the ammonia from the stable air will be absorbed by the mist. In another example including addition of base so that the pH in the liquid mist is e.g. 9-11, odour molecules, such as e.g. hydrogen sulphide, will react with the mist, thereby reducing the discharge of odours.

The liquid with the absorbed dust particles and neutralized substances drops down to the bottom of the box, from where it may be sucked out with a view to recycling or use as a fertilizer.

The moist air 5b neutralized in terms of ammonia/odorous substances is then sucked through one or more filters, 8a and 8b, which may consist of transverse slats or pipes, which extend in parallel at a certain mutual distance, and which are constructed to catch the liquid when it strikes against the slats/pipes. The liquid is conveyed down below the filters, from where it may be pumped/drained back to the circulation vessel.

After the last drying of the air, the dried air 5c is discharged in a cleaned neutralized state to the surroundings, thereby reducing the environmental impact.

The cleaning by means of this method is so effective that in many cases normally just 20% of the stable air has to be cleaned to ensure environmental well-being.

This high efficiency reduces the consumption of energy to the lowest possible level, just as the need for liquid as well as acid/base will be restricted to the lowest possible level.

Since special, expensive components are not incorporated, the system according to the invention will not be more expensive to construct than the previously known systems.

## Claims

1. A method of cleaning air, such as stable air, by sucking it out of the stable and supplying it to an air cleaning system constituted of an elongated box, pipe or container (2),
- said stable air (5a) first enters a mist zone where the stable air (5a) is mixed with liquid containing either an acid or a base to neutralize ammonia and/or odorous molecules the supply of acid- or base-containing liquid takes place in the form of a liquid mist (7), which liquid mist (7) is generated by nozzles (20) mounted on a pipe system (6), so that the liquid mist is supplied across the entire air flow area;
- following the mist zone, the air (5b) is conveyed through a filter (8a, 8b) in order to collect the liquid,
- the cleaned air (5c) is discharged to the surroundings by a ventilator (3) mounted at the discharge end of the box (2),
**characterized in that** the stable air (5a) passes through the mist zone in a horizontal direction of flow.

2. A method according to claims 1, **characterized in that** the liquid is collected below the nozzles (20) and is recycled by supply (21) to the nozzles (20).

3. A method according to claim 2, **characterized in that** the pH value of the liquid is measured (13) and adjusted by the addition of acid/base (14) to the liquid prior to the supply (21) to the nozzles (20).

4. An air cleaning system constituted of an elongated box, pipe or container (2) ensuring a substantially horizontally extending flow of air through a mist chamber, the box (2) comprises an admission opening (4) for stable air (5a) to be cleaned, the box (2) further comprises the mist chamber at the admission end holding a liquid mist (7) emitted from a pipe system (6) being provided with a plurality of nozzles (20), one or more filters (8a, 8b) are disposed in the box (2) after, i.e. downstream of, the mist chamber and a ventilator (3) is mounted at the discharge end of the box (2), i.e. downstream of the filters (8a, 8b), discharging clean, dried air (5c) to the surroundings.

5. An air cleaning system according to claim 5, **characterized in that** the nozzles (20) are mounted on a pipe system (6) (19a, 19c and 19d) with a certain mutual distance between the nozzles (20).

6. An air cleaning system according to claim 5, **characterized in that** each nozzle (20) is provided with a spirally extending outlet end (24) to generate a turbulent liquid mist (7).

## Patentansprüche

1. Verfahren zum Reinigen von Luft, wie etwa Stallluft, durch Heraussagen derselben aus dem Stall und Zuführen an ein Luftreinigungssystem, das aus einem länglichen Kasten, Rohr oder Behälter (2) gebildet ist,
- wobei die Stallluft (5a) zunächst in eine Nebelzone gelangt, in der die Stallluft (5a) mit einer Flüssigkeit gemischt wird, die entweder eine Säure oder eine Base enthält, um Ammoniak und/oder Geruchsmoleküle zu neutralisieren, wobei das Zuführen von säure- oder basenhaltiger Flüssigkeit in der Form eines Flüssignebels (7) stattfindet, wobei der Flüssignebel (7) durch Düsen (20) erzeugt wird, die an einem Rohrsystem (6) angebracht sind, sodass der Flüssignebel über den gesamten Luftströmungsbereich zugeführt wird;
- wobei die Luft (5b) nach der Nebelzone durch einen Filter (8a, 8b) geleitet wird, um die Flüssigkeit aufzufangen,
- wobei die gereinigte Luft (5c) durch einen Ventilator (3), der am Auslassende des Kastens (2) angebracht ist, an die Umgebung abgelassen wird,
**dadurch gekennzeichnet, dass** die Stallluft (5a) in einer horizontalen Strömungsrichtung durch die Nebelzone tritt.

2. Verfahren nach Anspruch 1, **dadurch gekennzeichnet, dass** die Flüssigkeit unter den Düsen (20) aufgefangen wird und durch Zuführen (21) zu den Düsen (20) zurückgeleitet wird.

3. Verfahren nach Anspruch 2, **dadurch gekennzeichnet, dass** der pH-Wert der Flüssigkeit gemessen (13) und durch Zusetzen von Säure/Base (14) zu der Flüssigkeit vor dem Zuführen (21) an die Düsen (20) eingestellt wird.

4. Luftreinigungssystem, das aus einem länglichen Kasten, Rohr oder Behälter (2) gebildet ist und einen im Wesentlichen horizontal verlaufenden Luftstrom durch eine Nebelkammer sicherstellt, wobei der Kasten (2) eine Einlassöffnung (4) für zu reinigende Stallluft (5a) umfasst, der Kasten (2) ferner die Nebelkammer am Einlassende umfasst, die einen Flüssignebel (7) enthält, der aus einem Rohrsystem (6) abgegeben wird, das mit einer Vielzahl von Düsen (20) versehen ist, ein oder mehrere Filter (8a, 8b) nach, d. h. stromabwärts der Nebelkammer im Kasten (2) angeordnet sind und ein Ventilator (3) am Auslassende des Kastens (2), d. h. stromabwärts der Filter (8a, 8b) angebracht ist, der saubere, getrocknete Luft (5c) in die Umgebung ablässt.

5. Luftreinigungssystem nach Anspruch 5, **dadurch gekennzeichnet, dass** die Düsen (20) mit einem bestimmten gegenseitigen Abstand zwischen den Düsen (20) an einem Rohrsystem (6) (19a, 19c und 19d) angebracht sind.

6. Luftreinigungssystem nach Anspruch 5, **dadurch gekennzeichnet, dass** jede Düse (20) mit einem sich spiralförmig erstreckenden Auslassende (24) versehen ist, um einen turbulenten Flüssignebel (7) zu erzeugen.

## Revendications

1. Procédé d'épuration d'air, tel que de l'air stable, en l'aspirant hors du stable et en le fournissant dans un système d'épuration d'air constitué d'une boîte, d'un tuyau ou d'un récipient allongé(e) (2),
- ledit air stable (5a) pénètre d'abord dans une zone de brouillard où l'air stable (5a) est mélangé avec un liquide contenant un acide ou une base afin de neutraliser l'ammoniac et/ou les molécules odorantes, l'alimentation en liquide contenant un acide ou une base se présente sous la forme d'un brouillard de liquide (7), lequel brouillard de liquide (7) est généré par des buses (20) montées sur un système de tuyaux (6), de sorte que le brouillard de liquide est alimenté dans toute la zone d'écoulement d'air ;
- après la zone de brouillard, l'air (5b) est acheminé à travers un filtre (8a, 8b) afin de collecter le liquide,
- l'air épuré (5c) est évacué dans les environs par un ventilateur (3) monté au niveau de l'extrémité d'évacuation de la boîte (2), **caractérisé en ce que** l'air stable (5a) passe à travers la zone de brouillard dans une direction horizontale de l'écoulement.

2. Procédé selon la revendication 1, **caractérisé en ce que** le liquide est collecté sous les buses (20) et est recyclé par l'alimentation (21) des buses (20).

3. Procédé selon la revendication 2, **caractérisé en ce que** la valeur du pH du liquide est mesurée (13) et ajustée par l'ajout d'un acide/d'une base (14) au liquide avant l'alimentation (21) des buses (20).

4. Système d'épuration d'air constitué d'une boîte, d'un tuyau ou d'un récipient (2) allongé(e) assurant un écoulement d'air s'étendant de manière sensiblement horizontale à travers une chambre de brouillard, la boîte (2) comprend une ouverture d'admission (4) pour un air stable (5a) à épurer, la boîte (2) comprend en outre la chambre de brouillard au niveau de l'extrémité d'admission contenant un brouillard de liquide (7) émis par un système de tuyaux (6) étant pourvu d'une pluralité de buses (20), un ou plusieurs filtres (8a, 8b) sont disposés dans la boîte (2) après la chambre de brouillard, c'est-à-dire en aval de celle-ci et un ventilateur (3) est monté au niveau de l'extrémité d'évacuation de la boîte (2), c'est-à-dire en aval des filtres (8a, 8b), évacuant l'air propre et séché (5c) dans les environs.

5. Système d'épuration d'air selon la revendication 5, **caractérisé en ce que** les buses (20) sont montées sur un système de tuyaux (6) (19a, 19c et 19d) avec une certaine distance mutuelle entre les buses (20).

6. Système d'épuration d'air selon la revendication 5, **caractérisé en ce que** chaque buse (20) est pourvue d'une extrémité de sortie s'étendant en spirale (24) pour générer un brouillard de liquide turbulent (7).
